(19) Europäisches Patentamt
European Patent Office
Office européen des brevets

(11) EP 2 069 173 B1

(12) FASCICULE DE BREVET EUROPEEN

(45) Date de publication et mention de la délivrance du brevet:
**12.01.2011 Bulletin 2011/02**

(21) Numéro de dépôt: **07823829.2**

(22) Date de dépôt: **14.09.2007**

(51) Int Cl.:
***B60T 8/1755*** (2006.01) ***B62D 6/00*** (2006.01)
***B62D 7/15*** (2006.01) ***B60W 30/02*** (2006.01)
***B60W 10/20*** (2006.01) ***B60W 10/18*** (2006.01)

(86) Numéro de dépôt international:
**PCT/FR2007/051934**

(87) Numéro de publication internationale:
**WO 2008/040889 (10.04.2008 Gazette 2008/15)**

(54) **PROCEDE ET SYSTEME DE CONTROLE D'UN VEHICULE EQUIPE D'UN SYSTEME DE FREINAGE PILOTE ET D'UN SYSTEME QUATRE ROUES DIRECTRICES**

VERFAHREN UND SYSTEM ZUM STEUERN EINES FAHRZEUGS, DAS MIT EINEM GESTEUERTEN BREMSSYSTEM UND MIT EINEM VIERRADLENKSYSTEM AUSGESTATTET IST

METHOD AND SYSTEM FOR CONTROLLING A VEHICLE EQUIPPED WITH A CONTROLLED BRAKING SYSTEM AND WITH A FOUR-WHEEL STEERING SYSTEM

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **06.10.2006 FR 0608784**

(43) Date de publication de la demande:
**17.06.2009 Bulletin 2009/25**

(73) Titulaire: **Renault S.A.S.**
**92100 Boulogne-Billancourt (FR)**

(72) Inventeurs:
- **LE VOURC'H, Yves**
  **F-78150 Le Chesnay (FR)**
- **LORIMIER, Lionel**
  **F-78180 Montigny Le Bretonneux (FR)**
- **POTHIN, Richard**
  **F-78760 Jouars-Ponchartrain (FR)**

(56) Documents cités:
**EP-A2- 1 234 741 DE-A1-102006 013 788**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 069 173 B1

Printed by Jouve, 75001 PARIS (FR)

## Description

La présente invention concerne un procédé de contrôle d'un véhicule équipé d'un système de freinage piloté et d'un système quatre roues directrices. Elle vise également un système mettant en oeuvre le procédé selon l'invention.

La présente invention concerne plus particulièrement un procédé et un système de répartition d'une perturbation en lacet à rejeter agissant sur un véhicule entre un système de freinage piloté et un système quatre roues directrices équipant ce véhicule.

Actuellement la plupart des véhicules sont équipés de systèmes actifs de contrôle ayant pour objectif d'améliorer le comportement du véhicule et d'assister le conducteur. Ces systèmes ont pour but d'augmenter la sécurité des occupants du véhicule en prenant en compte les conditions extérieures au véhicule, l'état du véhicule et la conduite du conducteur du véhicule.

Parmi ces systèmes de contrôle on trouve les systèmes de rejet d'une perturbation qui agit sur le véhicule. Ces systèmes de rejet de perturbation permettent de rejeter la perturbation en agissant sur le véhicule à l'aide d'un système de freinage piloté et d'un système quatre roues directrices, le rejet de la perturbation étant réparti entre le système quatre roues directrices et le système de freinage piloté.

On connaît dans l'état de l'art des systèmes de rejet d'une perturbation en lacet agissant sur un véhicule équipé d'un système quatre roues directrices et d'un système de freinage piloté, tels que celui décrit dans la demande de brevet américain US2006/0025896. Cette demande de brevet divulgue un système de contrôle d'un véhicule utilisant une stratégie de répartition du rejet d'une perturbation entre le système quatre roues directrices et le système freinage piloté.

Cependant, dans le document US2006/0025896 la stratégie de répartition du rejet d'une perturbation n'est pas décrite. De plus, le système de contrôle décrit dans cette demande de brevet est peu fiable car il est prévu pour le rejet d'une perturbation supposée connue.

Un but de l'invention est de proposer un procédé et un système de répartition d'un rejet d'une perturbation en lacet d'un véhicule utilisant une nouvelle stratégie.

Un autre but de l'invention est de proposer un procédé et un système de répartition d'un rejet d'une perturbation en lacet d'un véhicule permettant de réaliser le rejet d'une perturbation de manière plus fiable que les systèmes actuels.

Enfin, l'invention a pour but de proposer un procédé et un système de répartition d'un rejet d'une perturbation en lacet d'un véhicule permettant d'obtenir de meilleurs résultats que les systèmes actuellement connus.

L'invention permet d'atteindre les buts précités par un procédé de répartition d'une perturbation en lacet à rejeter agissant sur un véhicule, entre un système quatre roues directrices et un système de freinage piloté équipant le véhicule, le procédé comprenant les étapes suivantes:

- estimation de la perturbation en lacet à rejeter en fonction des données relatives au véhicule;
- détermination d'un intervalle d'angles applicables au système quatre roues directrices en fonction d'un angle quatre roues directrices utilisé et d'un angle quatre roues directrices limite ;
- en fonction dudit intervalle d'angles et d'un gain de rejet de perturbation du système quatre roues directrices, détermination d'un moment de lacet minimal et d'un moment de lacet maximal pouvant être généré par le système quatre roues directrices; et
- en fonction des moments minimal et maximal, et de l'estimation de la perturbation à rejeter, répartition de la perturbation estimée entre le système quatre roues directrices et le système de freinage piloté.

Le procédé selon l'invention permet dans un premier temps d'estimer une perturbation qui agit sur le véhicule en fonction des données relatives au véhicule. Cette perturbation est ensuite répartie entre le système quatre roues directrices et le système de freinage piloté, en fonction des moments minimal et maximal que le système quatre roues directrices peut générer. Le procédé selon l'invention permet d'utiliser de manière prioritaire le système quatre roues directrices. Le système quatre roues directrices permet de rejeter au moins une partie de la perturbation et le système de freinage piloté rejette le reste. Le fait de déterminer le moment minimal et le moment maximal que le système quatre roues directrices peut générer permet de savoir exactement le moment perturbateur que ce système peut rejeter et d'appliquer un freinage suffisant pour éliminer le reste du moment perturbateur associé à la perturbation en lacet. Une telle stratégie de répartition permet d'obtenir de meilleurs résultats en matière de rejet d'une perturbation en lacet agissant sur un véhicule que les stratégies et systèmes actuels.

De plus, le procédé selon l'invention permet de ne pas perturber le conducteur. En effet, le fait de déterminer les moments minimal et maximal que le système quatre roues directrices peut générer permet de maintenir les commandes quatre roues directrices autres que celles propres au rejet.

Cette stratégie de répartition innovante en boucle fermée, intégrant une estimation de la perturbation, est plus fiable que les structures en boucle fermée connues dans l'état de l'art. Le procédé selon l'invention comprend une estimation, en fonction des données relatives au véhicule, des informations relatives à la perturbation qui ne sont pas mesurables, mais qui sont nécessaires pour réaliser le rejet de la perturbation. La stratégie utilisée dans le procédé selon l'invention permet de réaliser un meilleur rejet de la perturbation que les systèmes actuels car elle est mieux adaptée à l'utilisation de deux systèmes de rejet pour réaliser le rejet d'une perturbation en lacet agissant sur le véhicule.

Le procédé selon l'invention permet de réaliser le rejet des perturbations extérieures telles qu'un coup de vent latéral, un freinage sur une adhérence asymétrique, un lever de pied en courbe. Il permet aussi de rejeter les perturbations paramétriques telles qu'une variation de masse du véhicule, une variation des rigidités de dérives des pneus du véhicule.

Les moments minimal et maximal pouvant être générés par le système quatre roues directrices sont déterminés par les expressions suivantes :

$$moment_4RD.\min = -\frac{angle_4RD_\lim ites.\max}{G_{\alpha 4RD}(V)}$$

$$moment_4RD.\max = -\frac{angle_4RD_\lim ites.\min}{G_{\alpha 4RD}(V)}$$

où *angle*_4*RD*_lim*ites*.max et *angle*_4*RD*_lim*ites*.min sont les valeurs minimales et maximales de l'intervalle d'angles applicables au système quatre roues directrices et $G_{\alpha 4RD}(V)$ est le gain de rejet de perturbation du système quatre roues directrices en fonction de la vitesse V du véhicule.

Dans une version particulière, le procédé selon l'invention peut comprendre une prise en compte d'une adhérence dans le gain de rejet de perturbation associé au système quatre roues directrices et/ou au système de freinage piloté.

Dans une autre version particulière, le procédé selon l'invention peut comprendre une prise en compte d'une saturation sur le train arrière du véhicule dans la détermination de l'intervalle d'angles applicables audit système quatre roues directrices.

Le procédé selon l'invention comprend en outre un rejet asymptotique de la perturbation par le système quatre roues directrices et le système de freinage piloté, en fonction de la répartition de la perturbation entre le système quatre roues directrices et le système de freinage piloté. Chaque système rejette de manière autonome la partie de la perturbation qui lui a été confiée.

Avantageusement, le procédé selon l'invention peut être mis en oeuvre lorsqu'une situation prédéterminée est détectée. Dans ce cas, le procédé selon l'invention comprend une détection d'une situation particulière ou prédéterminée, en fonction des données relatives au véhicule.

Avantageusement, la répartition de la perturbation peut être effectuée de la manière suivante :

- si $\hat{d} \in$ [*moment*_4*RD*.min;*moment*_4*RD*.max] alors $\begin{matrix} \hat{d}_{4RD} = \hat{d} \\ \hat{d}_{freinage} = 0 \end{matrix}$ : dans ce $\hat{d}_{freinage = 0}$ cas particulier le système de freinage n'est pas utilisé ;
- si $\hat{d}$ < *moment* _4*RD*. min alors ; $\begin{matrix} \hat{d}_{4RD} = moment_4RD.\min \\ \hat{d}_{freinage} = \hat{d} - moment_4RD.\min \end{matrix}$ ; et
- si $\hat{d}$ > *moment*_4*RD*.max alors $\begin{matrix} \hat{d}_{4RD} = moment_4RD.\max \\ \hat{d}_{freinage} = \hat{d} - moment_4RD.\max \end{matrix}$

  où $\hat{d}$ est la perturbation estimée, $\ddot{d}_{4RD}$ la perturbation à rejeter par le système quatre roues directrices, $\hat{d}_{freinage}$ la perturbation à rejeter par le système de freinage piloté et *moment*_4*RD.min* et *moment*_4*RD*.max sont respectivement les moments minimal et maximal pouvant être générés par ledit système quatre roues directrices.

La répartition adoptée dans le procédé selon l'invention permet de se servir de manière prioritaire du système quatre roues directrices. Ce qui permet :

- de limiter les décélérations du véhicule qui seraient inévitables lors d'un rejet avec action de freinage immédiate ;

- de limiter l'utilisation du système de freinage piloté dont la durée de vie est plus limitée que celle du système quatre roues directrices ; et
- de combiner de manière coordonnée les actions du système de freinage piloté et du système quatre roues directrices.

Avantageusement, le système quatre roues directrices peut réaliser un rejet d'au moins une partie de la perturbation estimée selon les expressions suivantes :

$$\alpha_2 = -G_{\alpha 4RD} . \hat{d}_{4RD}$$

avec

$$G_{\alpha 4RD} = \frac{((D_1L_1 - D_2L_2) * (MV^2 L_2 + D_1L_1(L_1 + L_2)) - D_1(L_1 + L_2)(D_1L_1^2 + D_2L_2^2)}{VD_1D_2L_2(L_1 + L_2)}$$

où M (kg) est la masse totale du véhicule, $L_1$ (m) la distance du centre de gravité G du véhicule à l'essieu avant, $L_2$ (m) la distance de G à l'essieu arrière, $D_1$ (N/rad) la rigidité de dérive avant, $D_2$ (N/rad) la rigidité de dérive arrière, V (m/s) la vitesse du véhicule, $\hat{d}_{4RD}$ la perturbation à rejeter par le système quatre roues directrices, $\alpha_2$ l'angle que doivent faire les roues arrière avec l'axe longitudinal du véhicule pour rejeter la perturbation à rejeter par le système quatre roues directrices, $G\alpha_{4RD}$ le gain de rejet de perturbation associé au système quatre roues directrices et ^ signifiant que les valeurs sont estimées.

D'une manière avantageuse, le système de freinage piloté peut réaliser un rejet d'au moins une partie de la perturbation estimée selon les expressions suivantes :

$$Mfx = -Ga_{freinage} . \hat{d}_{freinage}$$

avec

$$Ga_{freinage} = \frac{((D_1L_1 - D_2L_2).(MV^2 + D_1L_1 - D_2L_2) + D_1L_1^2 + D_2L_2^2}{V}$$

où M (kg) est la masse totale du véhicule, $L_1$ (m) la distance du centre de gravité G du véhicule à l'essieu avant, $L_2$ (m) la distance de G à l'essieu arrière, $D_1$ (N/rad) la rigidité de dérive avant, $D_2$ (N/rad) la rigidité de dérive arrière, V (m/s) la vitesse du véhicule, $\hat{d}_{freinage}$ la perturbation à rejeter par ledit système freinage piloté, *Mfx* le moment de lacet dû au freinage qui doit être généré par ledit système de pilotage, $Ga_{freinage}$ le gain de rejet de perturbation associé au système de freinage piloté et ^ signifiant que les valeurs sont estimées.

L'estimation de la perturbation peut être réalisée selon la loi suivante :

$$\begin{bmatrix} \dot{\hat{\psi}} \\ \dot{\hat{\beta}} \\ \dot{\hat{\alpha}}_{f2} \\ \dot{\hat{M}}_{Fxf} \\ \dot{\hat{d}} \end{bmatrix} = \begin{bmatrix} -\frac{D_1L_1^2 + D_2L_2^2}{VI_z} & \frac{D_2L_2 - D_1L_1}{I_z} & -\frac{D_2L_2}{I_Z} & \frac{1}{I_Z} & 0 \\ -1 + \frac{D_2L_2 - D_1L_1}{MV^2} & -\frac{D_1 + D_2}{MV} & \frac{D_2}{MV} & 0 & 0 \\ 0 & 0 & -\frac{1}{\upsilon} & 0 & 0 \\ 0 & 0 & 0 & -\frac{1}{\tau} & 0 \\ 0 & 0 & 0 & 0 & 0 \end{bmatrix} \begin{bmatrix} \hat{\dot{\psi}} \\ \hat{\beta} \\ \hat{\alpha}_{f2} \\ \hat{M}_{Fxf} \\ \hat{d} \end{bmatrix} + \begin{bmatrix} 0 \\ 0 \\ 0 \\ \frac{1}{\tau} \\ 0 \end{bmatrix} M_{Fxf} + \begin{bmatrix} \frac{D_1L_1}{I_Z} \\ \frac{D_1}{MV} \\ 0 \\ 0 \\ 0 \end{bmatrix} \alpha_1 + \begin{bmatrix} 0 \\ 0 \\ \frac{1}{\upsilon} \\ 0 \\ 0 \end{bmatrix} \alpha_2 + K(V)(\dot{\psi} - \hat{\dot{\psi}})$$

avec

$$\hat{y} = \begin{pmatrix} 1 & 0 & 0 & 0 & 1 \end{pmatrix} \begin{bmatrix} \hat{\dot{\psi}} \\ \hat{\beta} \\ \hat{\alpha}_{f2} \\ \hat{M}_{Fxf} \\ \hat{d} \end{bmatrix}$$

où M (kg) est la masse totale du véhicule, $I_z$ (N.m) l'inertie du véhicule autour d'un axe vertical passant par son centre de gravité G, $L_1$ (m) la distance de G à l'essieu avant, $L_2$ (m) la distance de G essieu arrière, L (m) l'empattement du véhicule, $D_1$ (N/rad) la rigidité de dérive avant, $D_2$ (N/rad) la rigidité de dérive arrière, $\alpha_1$ et $\alpha_2$ (rad) respectivement l'angle que font les roues avant et arrière avec l'axe longitudinal du véhicule, $\alpha_{f1}$ et $\alpha_{f2}$ l'angle de braquage filtré respectivement des roues avant et arrière, *Mfx* le moment de lacet du au freinage, *Mfxf* le moment de lacet du au freinage filtré, V (m/s) la vitesse du véhicule, $\dot{\psi}$ la vitesse de rotation du véhicule autour de son centre de gravité suivant un axe vertical, β l'angle que fait le vecteur vitesse du véhicule avec son axe longitudinal, *y* la vitesse de lacet du véhicule, υ une constante de temps caractéristique de l'actionneur de braquage, d la perturbation, ^ signifiant que les valeurs sont estimées. K(V) est le paramètre de réglage de l'estimation de la perturbation d. Le paramètre K(V) évolue en fonction de la vitesse.

Le procédé selon l'invention peut en outre comprendre une mesure d'au moins une grandeur choisie parmi une pluralité de grandeurs comprenant la vitesse du véhicule, la vitesse de lacet du véhicule, l'angle des roues avant du véhicule et l'angle des roues arrière du véhicule, l'angle de braquage du volant. Ces grandeurs peuvent être mesurées à l'aide de capteurs adéquats.

En outre le procédé selon l'invention peut comprendre une estimation d'un moment de lacet de freinage effectif ou d'une adhérence, en fonction des données relatives au véhicule.

Selon un autre aspect de l'invention il est proposé un système de répartition d'une perturbation en lacet à rejeter agissant sur un véhicule, entre un système quatre roues directrices et un système de freinage piloté équipant ledit véhicule, ledit système comprenant :

- des moyens pour estimer ladite perturbation en lacet à rejeter en fonction des données relatives audit véhicule ;
- des moyens pour déterminer un intervalle d'angles applicables audit système quatre roues directrices en fonction d'un angle quatre roues directrices utilisé et d'un angle quatre roues directrices limite ;
- des moyens pour déterminer un moment minimal et un moment maximal pouvant être généré par ledit système quatre roues directrices, en fonction dudit intervalle d'angles et d'un gain de rejet de perturbation dudit système quatre roues directrices ; et
- des moyens de répartition de ladite perturbation estimée entre ledit système quatre roues directrices et ledit système de freinage piloté en fonction desdits moments minimal et maximal et de ladite estimation de la perturbation à rejeter.

Ces moyens peuvent se présenter sous forme de modules pouvant être incorporés dans une unité de contrôle du véhicule tel qu'un calculateur. Le système peut en outre comprendre des capteurs permettant de mesurer la vitesse du véhicule, la vitesse de lacet du véhicule, l'angle des roues avant du véhicule, l'angle des roues arrière du véhicule et l'angle de braquage du volant. Il peut aussi comprendre des moyens de calculs permettant d'estimer un moment de lacet dû au freinage et une adhérence en fonction des données relatives au véhicule.

Avantageusement, le système selon l'invention peut en outre comprendre des moyens de détection d'une situation prédéterminée parmi une pluralité de situations prédéterminée et des moyens d'activation et de désactivation du premier et/ou du deuxième module.

D'autres caractéristiques et avantages de la présente invention apparaîtront à la lecture de la description d'un mode de réalisation particulier et à l'examen des figures annexées sur lesquelles:

- la figure 1 est une représentation schématique d'un premier mode de réalisation du procédé selon l'invention ;
- la figure 2 est une représentation schématique d'un second mode de réalisation du procédé selon l'invention ;
- la figure 3 est une représentation schématique d'un module de répartition d'un rejet de perturbation selon l'invention.

La figure 1 est une représentation schématique d'un premier mode de réalisation du procédé selon l'invention.

Le système représenté en figure 1 s'applique sur un véhicule équipé d'un système de braquage des roues arrière et d'un système de freinage piloté. Il peut être mis en oeuvre dans le calculateur dédié au freinage piloté, au pilotage du système quatre roues directrices ou dans le cadre par exemple d'un contrôle global du châssis ou encore au niveau du calculateur sur lequel un superviseur est implanté. Selon les cas, différentes informations peuvent être échangées entre les calculateurs concernés, par l'intermédiaire d'un moyen de transmission de l'information embarqué dans le véhicule.

Dans le mode de réalisation représenté en figure 1, on suppose que le système selon l'invention est implanté au niveau du calculateur 1 de supervision du système de braquage des roues arrière et du système de freinage piloté.

Le système représenté en figure 1 comprend une pluralité de modules.

Le module 2 de signaux d'entrée reçoit des informations 101 sur l'état du véhicule et des informations 102 sur le conducteur. Les informations 101 et 102 sont fournies par le module 10 qui comprend des capteurs placés sur le véhicule. Le module 2 reçoit aussi des informations 143 sur les requêtes émises par le système selon l'invention. Les informations 143 sur les requêtes sont envoyées au module 2 par un module 14 surveillant les requêtes système. En fonction des informations 101, 102 et 143, le module 2 permet de déterminer:

- une vitesse de lacet 21 du véhicule, qui peut être mesurée par un capteur placé sur le véhicule;
- une vitesse longitudinale 23 du véhicule, qui peut être estimée en faisant une mesure de la vitesse ABS des roues d'un essieu;
- un angle de braquage 22 du volant, qui peut être obtenu par un capteur ou estimé en fonction d'informations relatives au véhicule;
- une adhérence 24, qui peut être estimée à partir de mesures de capteurs placés sur le véhicule;
- un moment de lacet de freinage effectif 25, qui peut être estimé à partir de mesures de capteurs placés sur le véhicule; et
- un angle 26 des roues arrière, qui peut être obtenu par un capteur ou estimé en fonctions d'informations relatives au véhicule.

Ces données sont fournies au module 3, qui est un observateur de moment de perturbation en lacet du véhicule. L'observateur 3 peut être construit à partir d'un modèle deux roues sans ballant en faisant l'hypothèse qu'une perturbation d de type échelon peut agir directement sur la vitesse de lacet du véhicule sur un intervalle de temps limité. L'observateur 3 permet d'estimer un moment de perturbation en lacet total 31. L'estimation du moment de perturbation en lacet total est effectuée selon les relations suivantes:

$$\begin{bmatrix} \dot{\hat{\dot\psi}} \\ \dot{\hat{\beta}} \\ \dot{\hat{\alpha}}_{f2} \\ \dot{\hat{M}}_{Fxf} \\ \dot{\hat{d}} \end{bmatrix} = \begin{bmatrix} -\frac{D_1L_1^2 + D_2L_2^2}{VI_z} & \frac{D_2L_2 - D_1L_1}{I_z} & -\frac{D_2L_2}{I_Z} & \frac{1}{I_Z} & 0 \\ -1+\frac{D_2L_2 - D_1L_1}{MV^2} & -\frac{D_1+D_2}{MV} & \frac{D_2}{MV} & 0 & 0 \\ 0 & 0 & -\frac{1}{\upsilon} & 0 & 0 \\ 0 & 0 & 0 & -\frac{1}{\tau} & 0 \\ 0 & 0 & 0 & 0 & 0 \end{bmatrix} \cdot \begin{bmatrix} \hat{\dot\psi} \\ \hat{\beta} \\ \hat{\alpha}_{f2} \\ \hat{M}_{Fxf} \\ \hat{d} \end{bmatrix} + \begin{bmatrix} 0 \\ 0 \\ 0 \\ \frac{1}{\tau} \\ 0 \end{bmatrix} M_{Fxf} + \begin{bmatrix} \frac{D_1L_1}{I_Z} \\ \frac{D_1}{MV} \\ 0 \\ 0 \\ 0 \end{bmatrix} \alpha_1 + \begin{bmatrix} 0 \\ 0 \\ \frac{1}{\upsilon} \\ 0 \\ 0 \end{bmatrix} \alpha_2 + K(V)(\dot\psi - \hat{y})$$

où

$$\hat{y} = \begin{pmatrix} 1 & 0 & 0 & 0 & 1 \end{pmatrix} \begin{bmatrix} \hat{\dot\psi} \\ \hat{\beta} \\ \hat{\alpha}_{f2} \\ \hat{M}_{Fxf} \\ \hat{d} \end{bmatrix}$$

et où M (kg) est la masse totale du véhicule, $I_Z$ (N.m) l'inertie du véhicule autour d'un axe vertical passant par son centre

de gravité G, $L_1$ (m) la distance de G à l'essieu avant, $L_2$ (m) la distance de G à l'essieu arrière, L (m) l'empattement du véhicule, $D_1$ (N/rad) la rigidité de dérive avant, $D_2$ (N/rad) la rigidité de dérive arrière, $\alpha_1$ et $\alpha_2$ (rad) respectivement l'angle que font les roues avant et arrière avec l'axe longitudinal du véhicule, $\alpha_{f1}$ et $\alpha_{f2}$ l'angle de braquage filtré respectivement des roues avant et arrière, *Mfx* le moment de lacet du au freinage, *Mfxf* le moment de lacet du au freinage filtré, V (m/s) la vitesse du véhicule, $\dot{\psi}$ la vitesse de rotation du véhicule autour de son centre de gravité G suivant un axe vertical, $\beta$ l'angle de dérive, c'est-à-dire, l'angle que fait le vecteur vitesse du véhicule avec son axe longitudinal, *y* la vitesse de lacet du véhicule, $\upsilon$ une constante de temps caractéristique de l'actionneur de braquage, d la perturbation, ^ signifiant que les valeurs sont estimées. K(V) est le paramètre de réglage de l'estimation de la perturbation d. Le paramètre K(V) évolue en fonction de la vitesse.

Le moment de perturbation en lacet total 31 est ensuite fourni au module 4, qui réalise la répartition de la perturbation en lacet à rejeter entre le système de freinage piloté et le système de braquage des roues arrière. Le module 4 reçoit de la part d'un module 11 un angle de braquage des roues arrière utilisé 111 par d'autres systèmes de contrôle du véhicule. D'une manière similaire un module 12 fournit au module 4 un angle limite 121 de braquage des roues arrière, hors braquage dû aux autres systèmes ou stratégies d'utilisation du système de braquage des roues arrière. Le module 11 peut être un superviseur d'autres systèmes de contrôle utilisant le système de braquage des roues arrière. Le module 12 peut être un module de supervision du système de braquage des roues arrière. En fonction des angles 111 et 121, le module 4 permet de déterminer un intervalle d'angles de braquage disponibles pour le système de braquage des roues arrière.

En fonction de l'intervalle d'angles disponibles, le module 4 permet de calculer les moment maximal et minimal pouvant être générés par le système de braquage des roues arrière, selon les relations suivantes :

$$moment_4RD.\min = -\frac{angle_4RD_limites.\max}{G_{\alpha 4RD}(V)}$$

$$moment_4RD.\max = -\frac{angle_4RD_limites.\min}{G_{\alpha 4RD}(V)}$$

où *angle*_4*RD*_limi*tes*.max et angle_4*RD*_lim*ites*.min sont les valeurs minimales et maximales de l'intervalle d'angles applicables au système de braquage des roues arrière et $G_{\alpha 4RD}(V)$ est le gain de rejet de perturbation du système de braquage des roues arrière en fonction de la vitesse V du véhicule.

En fonction, du moment de perturbation en lacet total 31, de l'angle de braquage des roues arrière utilisé 111 et des moments minimal et maximal calculés, le module 4 réalise la répartition de la perturbation en lacet entre le système de freinage limité et le système de braquage des roues arrière. Cette répartition est réalisée de la manière suivante :

- si $\hat{d} \in$ [*moment*_4*RD*.min;*moment*_4*RD*.max] alors $\begin{matrix} \hat{d}_{4RD} = \hat{d} \\ \hat{d}_{freinage} = 0 \end{matrix}$ : dans ce cas particulier le système de freinage n'est pas utilisé;
- si $\hat{d}$ < *moment*_4*RD*. min alors $\begin{matrix} \hat{d}_{4RD} = moment_4RD.\min \\ \hat{d}_{freinage} = \hat{d} - moment_4RD.\min \end{matrix}$ ; et
- $\hat{d}$ si > moment 4*RD*. max alors $\begin{matrix} \hat{d}_{4RD} = moment_4RD.\max \\ \hat{d}_{freinage} = \hat{d} - moment_4RD.\max \end{matrix}$

où $\hat{d}$ est la perturbation estimée, $\hat{d}_{4RD}$ est la perturbation 41 à rejeter par le système de braquage des roues arrières, $\hat{d}_{freinage}$ la perturbation 42 à rejeter par le système de freinage piloté et *moment*_4*RD*.min et moment_4*RD*.max sont respectivement les moments minimal et maximal pouvant être générés par ledit

système de braquage des roues arrière. Le module 4 permet en quelque sorte de diviser la perturbation en

lacet totale estimée $\hat{d}$ en deux perturbations : une perturbation $\hat{d}_{4RD}$ dont le rejet doit être réalisé par le système de braquage des roues arrières, et une perturbation $\hat{d}_{freinage}$ dont le rejet doit être réalisé par le système de freinage piloté.

La perturbation 41 à rejeter par le système de braquage des roues arrière est ensuite fournie au module 5 qui contient la loi de commande du rejet de cette perturbation 41. Ce module 5 permet de déterminer l'angle des roues arrière 51 nécessaire pour réaliser le rejet de la perturbation 41 qui est prise en charge par le système de braquage des roues arrière, en fonction de cette perturbation 41 à rejeter, de la vitesse longitudinale 23 du véhicule et de l'adhérence estimée 24. Cet angle 51 peut être déterminé, par exemple, selon les relations suivantes :

$$\alpha_2 = -G_{\alpha 4RD}.\hat{d}_{4RD}$$

avec

$$G_{\alpha 4RD} = \frac{((D_1L_1 - D_2L_2)*(MV^2L_2 + D_1L_1(L_1 + L_2)) - D_1(L_1 + L_2)(D_1L_1^2 + D_2L_2^2)}{VD_1D_2L_2(L_1 + L_2)}$$

où M (kg) est la masse totale du véhicule, $L_1$ (m) la distance du centre de gravité G du véhicule à l'essieu avant, $L_2$ (m) la distance de G à l'essieu arrière, $D_1$ (N/rad) la rigidité de dérive avant, $D_2$ (N/rad) la rigidité de dérive arrière, V (m/s) la vitesse du véhicule, $\hat{d}_{4RD}$ la perturbation rejeter par ledit système de braquage des roues arrières, $\alpha_2$ l'angle 51 que doivent faire les roues arrière avec l'axe longitudinal du véhicule pour rejeter la perturbation à rejeter par le système de braquage des roues arrière et $G\alpha_{4RD}$ le gain de rejet de perturbation associé au système quatre roues directrices.

Le module 5 fournit un angle de braquage 51 à réaliser par le système de braquage des roues arrière. Cet angle 51 est ensuite sommé avec l'angle de braquage 111 utilisé par les autres systèmes ou stratégies de braquage des roues arrière. L'angle de braquage total 52 obtenu est communiqué sous forme d'une requête, d'une part aux actionneurs 8 de braquage des roues arrières pour réaliser un rejet asymptotique de la perturbation 41, et d'autre part au module 14 des requêtes système. Ce module 14 fournit cette information de requête de braquage des roues arrière au module 2 de signaux d'entrée permettant ainsi un bouclage du système selon l'invention.

La perturbation 42 à rejeter par le système freinage piloté est ensuite fournie au module 6 qui contient la loi de commande du rejet de cette perturbation 42. Ce module 6 permet de déterminer un moment de lacet dû au freinage 61 nécessaire pour réaliser le rejet de la perturbation 42 qui est pris en charge par le système de freinage piloté, en fonction de cette perturbation 42 à rejeter, de la vitesse longitudinale 23 du véhicule et de l'adhérence estimée 24. Ce moment 61 peut être déterminé, par exemple, selon les relations suivantes :

$$Mfx = -Ga_{freinage}.\hat{d}_{freinage}$$

où

$$Ga_{freinage} = \frac{((D_1L_1 - D_2L_2).(MV^2 + D_1L_1 - D_2L_2) + D_1L_1^2 + D_2L_2^2}{V}$$

où M (kg) est la masse totale du véhicule, $L_1$ (m) la distance du centre de gravité G du véhicule à l'essieu avant, $L_2$ (m) la distance de G à l'essieu arrière, $D_1$ (N/rad) la rigidité de dérive avant, $D_2$ (N/rad) la rigidité de dérive arrière, V (m/s) la vitesse 23 du véhicule, $\hat{d}_{freinage}$ la perturbation à rejeter par le système freinage piloté, *Mfx* le moment de lacet 61 dû au freinage qui doit être généré par ledit système de pilotage et $Ga_{freinage}$ le gain de rejet de perturbation associé au système de freinage piloté.

Le module 6 fournit le moment 61 à générer par le système de freinage piloté pour rejeter la perturbation 42 à un module 7, qui correspond à un système d'arbitrage de requêtes de glissement. Ce module 7 émet une requête de glissement 71, en fonction du moment de lacet dû au freinage 61 et d'autres requêtes de glissement 131 émises par d'autres systèmes ou stratégies agissant sur le freinage piloté. Cette requête de glissement 71 est ensuite envoyée, d'une part aux actionneurs 9 du système de freinage piloté pour réaliser un rejet asymptotique de la perturbation 42, et d'autre part au module 14 des requêtes système. Ce module 14 fournit cette information de requête de glissement au module 2 de signaux d'entrée permettant ainsi un bouclage du système selon l'invention.

Ainsi la perturbation en lacet totale estimée $\hat{d}$ est rejetée de manière asymptotique en effectuant les rejets asymptotiques des perturbations 41 et 42, effectués respectivement par le système de braquage des roues arrière et par le système de freinage piloté.

La figure 2 est une représentation schématique d'un deuxième mode de réalisation du procédé selon l'invention. Dans ce deuxième mode de réalisation, le système mettant en oeuvre le procédé comprend en plus un module 15 permettant de réaliser, d'une part la détection d'une situation prédéterminée et, d'autre part l'activation (ou la désactivation) de l'estimation de la perturbation, de la répartition de la perturbation estimée entre le système de braquage des roues arrières et le système de freinage piloté et le rejet de la perturbation par ces systèmes. Le module 50 détecte une situation parmi une pluralité de situations prédéterminées. Dès qu'une situation prédéterminée est détectée, l'activation (et/ou la désactivation) est effectuée au travers d'un signal de commande 151 envoyé au module 3, 4, 5 et 6.

La figure 3 est une représentation détaillée du module 4 permettant de réaliser la répartition de la perturbation en lacet à rejeter entre le système de freinage piloté et le système de braquage des roues arrière. Tel que représenté sur la figure 3, ce module 4 comprend un premier bloc 43 qui permet de déterminer un intervalle 431 d'angles des roues arrière disponibles en fonction d'un angle des roues arrières utilisé 111 et d'un angle des roues arrière limite 121. Cet intervalle d'angle 431 est ensuite fourni à un bloc 45. Ce bloc 45 détermine les moments maximal 451 et minimal 452 pouvant être générés par le système de braquage des roues arrières en fonction de l'intervalle d'angle 431 et d'un gain 441 de rejet associé au système de braquage des roues arrière fourni par un bloc 44. La détermination des moments 451 et 452 est réalisée selon les expressions suivantes :

$$moment_4RD.\min = -\frac{angle_4RD_\lim ites.\max}{G_{\alpha 4RD}(V)}$$

$$moment_4RD.\max = -\frac{angle_4RD_\lim ites.\min}{G_{\alpha 4RD}(V)}$$

où *angle_ 4RD_* lim*ites.*max et *angle_*4*RD_*lim*ites*.min sont les valeurs minimales et maximales de l'intervalle d'angles 431 applicables au système de braquage des roues arrières et $G_{a4RD}(V)$ est le gain 441 de rejet de perturbation du système de braquage des roues arrière en fonction de la vitesse V du véhicule.

Le bloc 46 du module 4 réalise ensuite la répartition de la perturbation entre le système de freinage piloté et le système de braquage des roues arrière, en fonction des moments maximal 451 et minimal 452 pouvant être générés par le système de braquage des roues arrières et du moment de la perturbation en lacet totale estimée 31. Ce module fournit les perturbations 41 et 42 décrites plus haut.

Bien entendu l'invention n'est pas limitée aux exemples qui viennent d'être décrits. Par exemple, d'autres paramètres peuvent êtres pris en compte lors de l'estimation de la perturbation et le rejet de la perturbation estimée sans que l'on sorte du cadre de la présente invention.

## Revendications

1. Procédé de répartition d'une perturbation en lacet à rejeter agissant sur un véhicule, entre un système quatre roues directrices et un système de freinage piloté équipant ledit véhicule, ledit procédé comprenant les étapes suivantes :

   - estimation de ladite perturbation en lacet à rejeter en fonction des données relatives audit véhicule ;
   - détermination d'un intervalle d'angles (431) applicables audit système quatre roues directrices en fonction d'un angle quatre roues directrices utilisé (111) et d'un angle quatre roues directrices limite (121) ;
   - en fonction dudit intervalle d'angles (431) et d'un gain (441) de rejet de perturbation dudit système quatre roues directrices, détermination d'un moment de lacet minimal (452) et d'un moment de lacet maximal (451) pouvant être généré par ledit système quatre roues directrices ; et
   - en fonction desdits moments de lacet minimal (452) et maximal (451), et de ladite estimation de la perturbation à rejeter, répartition de ladite perturbation estimée entre ledit système quatre roues directrices et ledit système de freinage piloté.

2. Procédé selon la revendication 1, **caractérisé en ce qu'**il comprend, en outre, un rejet asymptotique de la perturbation par ledit système quatre roues directrices et ledit système de freinage piloté.

**3.** Procédé selon l'une quelconque des revendication 1 ou 2, **caractérisé en ce qu'**il est mis en oeuvre lorsqu'une situation prédéterminée est détectée.

**4.** Procédé selon l'une quelconque des revendications précédentes, **caractérisé en ce que** la répartition de la perturbation est effectuée de la manière suivante :

si $\hat{d} \in$ [*moment_4RD*.min;*moment_4RD*.max] alors
si $\hat{d}$ < *moment_4RD*.min alors
si $\hat{d}$ > *moment_4RD.max* alors
où $\hat{d}$ est la perturbation estimée, $\hat{d}_{4RD}$ la perturbation à rejeter par le système quatre roues directrices, $\hat{d}_{freinage}$ la perturbation à rejeter par le système de freinage piloté et *moment_4RD*.min et *moment_4RD*. max respectivement les moments minimal (452) et maximal (451) pouvant être générés par ledit système quatre roues directrices.

**5.** Procédé selon l'une quelconque des revendications précédentes, **caractérisé en ce qu'**il comprend en outre une prise en compte d'une adhérence (24) dans le gain (441) de rejet de perturbation associé au système quatre roues directrices et/ou au système de freinage piloté.

**6.** Procédé selon l'une quelconque des revendications précédentes, **caractérisé en ce qu'**il comprend en outre une prise en compte d'une saturation sur le train arrière du véhicule dans la détermination de l'intervalle d'angles (431) applicables audit système quatre roues directrices.

**7.** Procédé selon l'une quelconque des revendications précédentes, **caractérisé en ce que** le système quatre roues directrices réalise un rejet d'au moins une partie (41) de la perturbation estimée selon les expressions suivantes :

$$\alpha_2 = -G_{\alpha 4RD}.\hat{d}_{4RD}$$

où

$$G_{\alpha 4RD} = \frac{((D_1L_1 - D_2L_2)*(MV^2L_2 + D_1L_1(L_1+L_2)) - D_1(L_1+L_2)(D_1L_1^{\ 2} + D_2L_2^{\ 2})}{VD_1D_2L_2(L_1+L_2)}$$

où M (kg) est la masse totale du véhicule, $L_1$ (m) la distance du centre de gravité G du véhicule à l'essieu avant, $L_2$ (m) la distance du centre de gravité G du véhicule à l'essieu arrière, $D_1$ (N/rad) une rigidité de dérive avant, $D_2$ (N/rad) une rigidité de dérive arrière, V (m/s) la vitesse (23) du véhicule, $\hat{d}_{4RD}$ la perturbation (41) à rejeter par ledit système quatre roues directrices, $\alpha_2$ l'angle (51) que doivent faire les roues arrière avec l'axe longitudinal du véhicule pour rejeter $\hat{d}_{4RD}$ et $G_{a4RD}$ le gain (441) de rejet de perturbation associé au système quatre roues directrices.

**8.** Procédé selon l'une quelconque des revendications suivantes, **caractérisé en ce que** le système de freinage piloté réalise un rejet d'au moins une partie de la perturbation estimée selon les expressions suivantes :

$$Mfx = -Ga_{freinage}.\hat{d}_{freinage}$$

où

$$Ga_{freinage} = \frac{((D_1L_1 - D_2L_2).(MV^2 + D_1L_1 - D_2L_2) + D_1L_1^{\ 2} + D_2L_2^{\ 2}}{V}$$

où M (kg) est la masse totale du véhicule, $L_1$ (m) la distance du centre de gravité G du véhicule à l'essieu avant, $L_2$ (m) la distance de G à l'essieu arrière, $D_1$ (N/rad) une rigidité de dérive avant, $D_2$ (N/rad) une rigidité de dérive arrière, V (m/s) la vitesse (23) du véhicule, $\hat{d}_{freinage}$ la perturbation à rejeter par ledit système freinage piloté, *Mfx* le moment de lacet (61) dû au freinage qui doit être généré par ledit système de pilotage pour rejeter $\hat{d}_{freinage}$ et $Ga_{freinage}$ le gain de rejet de perturbation associé au système de freinage piloté.

**9.** Procédé selon l'une quelconque des revendications précédentes, **caractérisé en ce que** la perturbation est estimée selon la loi suivante :

$$\begin{bmatrix} \dot{\hat{\dot{\psi}}} \\ \dot{\hat{\beta}} \\ \dot{\hat{\alpha}}_{f2} \\ \dot{\hat{M}}_{Fxf} \\ \dot{\hat{d}} \end{bmatrix} = \begin{bmatrix} -\frac{D_1L_1^2+D_2L_2^2}{VI_z} & \frac{D_2L_2-D_1L_1}{I_z} & -\frac{D_2L_2}{I_Z} & \frac{1}{I_Z} & 0 \\ -1+\frac{D_2L_2-D_1L_1}{MV^2} & -\frac{D_1+D_2}{MV} & \frac{D_2}{MV} & 0 & 0 \\ 0 & 0 & -\frac{1}{\upsilon} & 0 & 0 \\ 0 & 0 & 0 & -\frac{1}{\tau} & 0 \\ 0 & 0 & 0 & 0 & 0 \end{bmatrix} \begin{bmatrix} \hat{\dot{\psi}} \\ \hat{\beta} \\ \hat{\alpha}_{f2} \\ \hat{M}_{Fxf} \\ \hat{d} \end{bmatrix} + \begin{bmatrix} 0 \\ 0 \\ 0 \\ \frac{1}{\tau} \\ 0 \end{bmatrix} M_{Fxf} + \begin{bmatrix} \frac{D_1L_1}{I_Z} \\ \frac{D_1}{MV} \\ 0 \\ 0 \\ 0 \end{bmatrix} \alpha_1 + \begin{bmatrix} 0 \\ 0 \\ \frac{1}{\upsilon} \\ 0 \\ 0 \end{bmatrix} \alpha_2 + K(V)(\dot{\psi}-\hat{y})$$

avec

$$\hat{y} = \begin{pmatrix} 1 & 0 & 0 & 0 & 1 \end{pmatrix} \begin{bmatrix} \hat{\dot{\psi}} \\ \hat{\beta} \\ \hat{\alpha}_{f2} \\ \hat{M}_{Fxf} \\ \hat{d} \end{bmatrix}$$

où M (kg) est la masse totale du véhicule, $I_z$ (N.m) l'inertie du véhicule autour d'un axe vertical passant par son centre de gravité G, $L_1$ (m) la distance de G à l'essieu avant, $L_2$ (m) la distance de G à l'essieu arrière, L (m) l'empattement du véhicule, $D_1$ (N/rad) une rigidité de dérive avant, $D_2$ (N/rad) une rigidité de dérive arrière, $\alpha_1$ et $\alpha_2$ (rad) respectivement l'angle que font les roues avant et arrière avec l'axe longitudinal du véhicule, $\alpha_{f1}$ et $\alpha_{f2}$ l'angle de braquage filtré respectivement des roues avant et arrière, *Mfx* le moment de lacet (25) dû au freinage, *Mfxf* le moment de lacet dû au freinage filtré, V (m/s) la vitesse (23) du véhicule, $\dot{\psi}$ la vitesse de rotation du véhicule autour de son centre de gravité suivant un axe vertical, β l'angle que fait le vecteur vitesse du véhicule avec son axe longitudinal, *y* la vitesse de lacet (21) du véhicule, υ une constante de temps caractéristique de l'actionneur de braquage, d la perturbation, ^ signifiant que les valeurs sont estimées.

**10.** Système de répartition d'une perturbation en lacet à rejeter agissant sur un véhicule, entre un système quatre roues directrices et un système de freinage piloté équipant ledit véhicule, ledit système comprenant :

- des moyens pour estimer ladite perturbation en lacet à rejeter en fonction des données relatives audit véhicule ;
- des moyens pour déterminer un intervalle d'angles (431) applicables audit système quatre roues directrices en fonction d'un angle quatre roues directrices utilisé (111) et d'un angle quatre roues directrices limite (121) ;
- des moyens pour déterminer un moment minimal (442) et un moment maximal (441) pouvant être généré par ledit système quatre roues directrices, en fonction dudit intervalle d'angles (431) et d'un gain (451) de rejet de perturbation dudit système quatre roues directrices ; et
- des moyens de répartition de ladite perturbation estimée entre ledit système quatre roues directrices et ledit système de freinage piloté en fonction desdits moments minimal (452) et maximal (451) et de ladite estimation de la perturbation à rejeter.

## Claims

1. Method for distributing a yaw disruption to be rejected acting on a vehicle, between a four-wheel steering system, and a controlled braking system fitted to the said vehicle, the said method comprising the following steps:

   - estimation of the said yaw disruption to be rejected as a function of the data relating to the said vehicle;
   - determination of a range of angles (431) applicable to the said four-wheel steering system as a function of a used four-wheel steering angle (111) and of a limit four-wheel steering angle (121);
   - as a function of the said range of angles (431) and of a disruption rejection gain (441) of the said four-wheel steering system, determination of a minimum yaw moment (452) and a maximum yaw moment (451) that can be generated by the said four-wheel steering system; and
   - as a function of the said minimum yaw moment (452) and maximum yaw moment (451), and of the said estimation of disruption to be rejected, distribution of the said estimated disruption between the said four-wheel steering system and the said controlled braking system.

2. Method according to Claim 1, **characterized in that** it also comprises an asymptotic rejection of the disruption by the said four-wheel steering system and the said controlled braking system.

3. Method according to either one of Claims 1 or 2, **characterized in that** it is applied when a predetermined situation is detected.

4. Method according to any one of the preceding claims, **characterized in that** the distribution of the disruption is carried out in the following manner:

   if $\hat{d} \in [moment_4WS.\min; moment_4WS.\max]$ then $$\hat{d}_{4WS} = \hat{d}$$ $$\hat{d}_{braking} = 0$$

   if $\hat{d} < moment_4WS.\min$ then $$\hat{d}_{4WS} = moment_4WS.\min$$ $$\hat{d}_{braking} = \hat{d} - moment_4WS.\min$$

   If $\hat{d} > moment_4WS.\max$ then $$\hat{d}_{4WS} = moment_4WS.\max$$ $$\hat{d}_{braking} = \hat{d} - moment_4WS.\max$$

   where $\hat{d}$ is the estimated disruption, $\hat{d}_{4WS}$ the disruption to be rejected by the four-wheel steering system, $\hat{d}_{braking}$ the disruption to be rejected by the controlled braking system and *moment*_4*WS*.min and *moment*_4*WS*.max respectively the minimum moment (452) and maximum moment (451) that can be generated by the said four-wheel steering system.

5. Method according to any one of the preceding claims, **characterized in that** it also comprises taking account of a cohesion (24) in the gain (441) of disruption rejection associated with the four-wheel steering system and/or with the controlled braking system.

6. Method according to any one of the preceding claims, **characterized in that** it also comprises taking account of a saturation on the rear wheel-axle unit of the vehicle in the determination of the range of angles (431) that can be applied to the four-wheel steering system.

7. Method according to any one of the preceding claims, **characterized in that** the four-wheel steering system carries out a rejection of at least one portion (41) of the estimated disruption according to the following expressions:

$$\alpha_2 = -G_{\alpha 4WS}.\hat{d}_{4WS}$$

where

$$G_{\alpha 4WS} = \frac{((D_1L_1 - D_2L_2)*(MV^2L_2 + D_1L_1(L_1 + L_2)) - D_1(L_1 + L_2)(D_1L_1^2 + D_2L_2^2)}{VD_1D_2L_2(L_1 + L_2)}$$

where M (kg) is the total weight of the vehicle, $L_1$ (m) the distance from the centre of gravity G of the vehicle to the front axle, $L_2$ (m) the distance from the centre of gravity G of the vehicle to the rear axle, $D_1$ (N/rad) a front cornering rigidity, $D_2$ (N/rad) a rear cornering rigidity, V (m/s) the speed (23) of the vehicle, $\hat{d}_{4WS}$ the disruption (41) to be rejected by the said four-wheel steering system, $\alpha_2$ the angle (51) that the rear wheels must make with the longitudinal axis of the vehicle in order to reject $\hat{d}_{4WS}$ and $G_{\alpha 4WS}$ the disruption rejection gain (441) associated with the four-wheel steering system.

**8.** Method according to any one of the preceding claims, **characterized in that** the controlled braking system rejects at least one portion of the estimated disruption according to the following expressions:

$$Mfx = -G\alpha_{braking}.\hat{d}_{braking}$$

where

$$G\alpha_{braking} = \frac{((D_1L_1 - D_2L_2).(MV^2 + D_1L_1 - D_2L_2)) + D_1L_1^2 + D_2L_2^2}{V}$$

where M (kg) is the total weight of the vehicle, $L_1$ (m) the distance from the centre of gravity G of the vehicle to the front axle, $L_2$ (m) the distance from G to the rear axle, $D_1$ (N/rad) a front cornering rigidity, $D_2$ (N/rad) a rear cornering rigidity, V (m/s) the speed (23) of the vehicle, $\hat{d}_{braking}$ the disruption to be rejected by the said controlled braking system, *Mfx* the yaw moment (61) due to the braking which must be generated by the said control system for rejecting $\hat{d}_{braking}$ and $G\alpha_{braking}$ the disruption rejection gain associated with the controlled braking system.

**9.** Method according to any one of the preceding claims, **characterized in that** the disruption is estimated according to the following law:

$$\begin{bmatrix} \dot{\hat{\psi}} \\ \dot{\hat{\beta}} \\ \dot{\hat{\alpha}}_{f2} \\ \dot{\hat{M}}_{Fxf} \\ \dot{\hat{d}} \end{bmatrix} = \begin{bmatrix} -\frac{D_1L_1^2 + D_2L_2^2}{VI_z} & \frac{D_2L_2 - D_1L_1}{I_z} & -\frac{D_2L_2}{I_z} & \frac{1}{I_z} & 0 \\ -1 + \frac{D_2L_2 - D_1L_1}{MV^2} & -\frac{D_1 + D_2}{MV} & \frac{D_2}{MV} & 0 & 0 \\ 0 & 0 & -\frac{1}{\upsilon} & 0 & 0 \\ 0 & 0 & 0 & -\frac{1}{\tau} & 0 \\ 0 & 0 & 0 & 0 & 0 \\ 0 & 0 & 0 & 0 & 0 \end{bmatrix} \begin{bmatrix} \hat{\psi} \\ \hat{\beta} \\ \hat{\alpha}_{f2} \\ \hat{M}_{Fxf} \\ \hat{d} \end{bmatrix} + \begin{bmatrix} 0 \\ 0 \\ 0 \\ \frac{1}{\tau} \\ 0 \end{bmatrix} M_{Fxf} + \begin{bmatrix} \frac{D_1L_1}{I_z} \\ \frac{D_1}{MV} \\ 0 \\ 0 \\ 0 \end{bmatrix} \alpha_1 + \begin{bmatrix} 0 \\ 0 \\ \frac{1}{\upsilon} \\ 0 \\ 0 \end{bmatrix} \alpha_2 + K(V)(\dot{\psi} - \hat{\dot{\psi}})$$

with

$$\hat{y} = \begin{pmatrix} 1 & 0 & 0 & 0 & 1 \end{pmatrix} \begin{bmatrix} \hat{\dot{\psi}} \\ \hat{\beta} \\ \hat{\alpha}_{f2} \\ \hat{M}_{Fxf} \\ \hat{d} \end{bmatrix}$$

where M (kg) is the total weight of the vehicle, $I_z$ (N.m) the inertia of the vehicle about a vertical axis passing through its centre of gravity G, $L_1$ (m) the distance from G to the front axle, $L_2$ (m) the distance from G to the rear axle, L (m) the wheelbase of the vehicle, $D_1$ (N/rad) a front cornering rigidity, $D_2$ (N/rad) a rear cornering rigidity, $\alpha_1$ and $\alpha_2$ (rad) respectively the angle that the front and rear wheels make with the longitudinal axis of the vehicle, $\alpha_{f1}$ and $\alpha_{f2}$ the filtered steering angle respectively of the front and rear wheels, *Mfx* the yaw moment (25) due to the braking, M*fxf* the yaw moment due to the filtered braking, V (m/s) the speed (23) of the vehicle, $\dot{\psi}$ the speed of rotation of the vehicle about its centre of gravity on a vertical axis, β the angle that the speed vector of the vehicle makes with its longitudinal axis, *y* the yaw speed (21) of the vehicle, υ a time constant characteristic of the steering actuator, d the disruption, ^ signifying that the values are estimated.

**10.** System for distributing a yaw disruption to be rejected acting on a vehicle, between a four-wheel steering system, and a controlled braking system fitted to the said vehicle, the said system comprising:

- means for estimating the said yaw disruption to be rejected as a function of the data relating to the said vehicle;
- means for determining a range of angles (431) applicable to the said four-wheel steering system as a function of a used four-wheel steering angle (111) and of a limit four-wheel steering angle (121);
- means for determining a minimum moment (442) and a maximum moment (441) that can be generated by the said four-wheel steering system, as a function of the said range of angles (431) and of a disruption rejection gain (451) of the said four-wheel steering system; and
- means for distributing the said estimated disruption between the said four-wheel steering system and the said controlled braking system as a function of the said minimum moment (452) and maximum moment (451) and of the said estimation of the disruption to be rejected.

## Patentansprüche

**1.** Verfahren zur Verteilung einer auf ein Fahrzeug wirkenden, zu beseitigenden Gierstörung zwischen einem Vierrad-Lenksystem und einem zum Fahrzeug gehörenden, gesteuerten Bremssystem, wobei das Verfahren die folgenden Schritte enthält:

- Schätzung der zu beseitigenden Gierstörung in Abhängigkeit von auf das Fahrzeug bezogenen Daten;
- Bestimmung eines Bereichs von Winkeln (431), die an das Vierrad-Lenksystem in Abhängigkeit von einem verwendetem Vierrad-Lenkungswinkel (111) und von einem Vierrad-Grenzlenkungswinkel (121) anwendbar sind;
- in Abhängigkeit von dem Bereich von Winkeln (431) und von einer Verstärkung (441) der Störbeseitigung des Vierrad-Lenksystems, Bestimmung eines minimalen Giermoments (452) und eines maximalen Giermoments (451), das vom Vierrad-Lenksystem erzeugt werden kann; und
- in Abhängigkeit vom minimalen Giermoment (452) und vom maximalen Giermoment (451) und von der Schätzung der zu beseitigenden Störung, Verteilung der geschätzten Störung zwischen dem Vierrad-Lenksystem und dem gesteuerten Bremssystem.

**2.** Verfahren nach Anspruch 1, **dadurch gekennzeichnet, dass** es außerdem eine asymptotische Beseitigung der Störung durch das Vierrad-Lenksystem und das gesteuerte Bremssystem enthält.

**3.** Verfahren nach einem der Ansprüche 1 oder 2, **dadurch gekennzeichnet, dass** es durchgeführt wird, wenn eine vorbestimmte Situation erfasst wird.

**4.** Verfahren nach einem der vorhergehenden Ansprüche, **dadurch gekennzeichnet, dass** die Verteilung der Störung folgendermaßen ausgeführt wird:

wenn gilt $\hat{d} \in$ [*Moment*_4RD.min;*Moment*_4RD.max],

dann gilt
$$\hat{d}_{4RD} = \hat{d}$$
$$\hat{d}_{Bremsen} = 0$$

wenn gilt $\hat{d}$ < *Moment*_4RD.min,

dann gilt
$$\hat{d}_{4RD} = Moment_4RD.min$$
$$\hat{d}_{Bremsen} = \hat{d} - Moment_4RD.min$$

wenn gilt $\hat{d}$ > *Moment*-4RD.max,

dann gilt
$$\hat{d}_{4RD} = Moment_4RD.max$$
$$\hat{d}_{Bremsen} = \hat{d} - Moment_4RD.max$$

wobei $\hat{d}$ die geschätzte Störung ist, $\hat{d}_{4RD}$ die durch das Vierrad-Lenksystem zu beseitigende Störung ist, $\hat{d}_{Bremsen}$ die vom gesteuerten Bremssystem zu beseitigende Störung ist, und *Moment*_4RD.min und *Moment*_4RD.max das minimale Moment (452) bzw. das maximale Moment (451) sind, die vom Vierrad-Lenksystem erzeugt werden können.

**5.** Verfahren nach einem der vorhergehenden Ansprüche, **dadurch gekennzeichnet, dass** es außerdem eine Berücksichtigung eines Kraftschlusses (24) in der dem Vierrad-Lenksystem und/oder dem gesteuerten Bremssystems zugeordneten Verstärkung (441) der Störungsbeseitigung enthält.

**6.** Verfahren nach einem der vorhergehenden Ansprüche, **dadurch gekennzeichnet, dass** es außerdem eine Berücksichtigung einer Sättigung an der Hinterachse des Fahrzeugs bei der Bestimmung des Bereichs von Winkeln (431) enthält, die an das Vierrad-Lenksystem anwendbar sind.

**7.** Verfahren nach einem der vorhergehenden Ansprüche, **dadurch gekennzeichnet, dass** das Vierrad-Lenksystem eine Beseitigung mindestens eines Teils (41) der geschätzten Störung gemäß den folgenden Formulierungen durchführt:

$$\alpha_2 = -G_{\alpha 4RD} . \hat{d}_{4RD},$$

wobei

$$G_{\alpha 4RD} = \frac{\left((D_1 L_1 - D_2 L_2) * (MV^2 L_2 + D_1 L_1 (L_1 + L_2))\right) - D_1 (L_1 + L_2)(D_1 L_1^2 + D_2 L_2^2)}{V D_1 D_2 L_2 (L_1 + L_2)}$$

wobei M(kg) das Gesamtgewicht des Fahrzeugs, $L_1$(m) der Abstand des Schwerpunkts G des Fahrzeugs zur Vorderachse, $L_2$(m) der Abstand des Schwerpunkts G des Fahrzeugs zur Hinterachse, $D_1$(/rad) eine vordere Driftsteifigkeit, $D_2$(N/rad) eine hintere Driftsteifigkeit, V(m/s) die Geschwindigkeit (23) des Fahrzeugs, $\hat{d}_{4RD}$ die durch das Vierrad-Lenksystem zu beseitigende Störung (41), $\alpha_2$ der Winkel (51), den die Hinterräder mit der Längsachse des Fahrzeugs bilden müssen, um $\hat{d}_{4RD}$ zu beseitigen, und $G_{\alpha 4RD}$ die Verstärkung (441) der Störungsbeseitigung ist, die dem Vierrad-Lenksystem zugeordnet ist.

**8.** Verfahren nach einem der vorhergehenden Ansprüche, **dadurch gekennzeichnet, dass** das gesteuerte Bremssystem eine Beseitigung mindestens eines Teils der geschätzten Störung gemäß den folgenden Formulierungen realisiert:

$$Mfx = -G\alpha_{Bremsen} \cdot \hat{d}_{Bremsen}$$

wobei gilt

$$G\alpha_{Bremsen} = \frac{\left((D_1L_1 - D_2L_2).\left(MV^2 + D_1L_1 - D_2L_2\right)\right) + D_1L_1^{\ 2} + D_2L_2^{\ 2}}{V}$$

wobei M(kg) das Gesamtgewicht des Fahrzeugs, $L_1$(m) der Abstand des Schwerpunkts G des Fahrzeugs zur Vorderachse, $L_2$(m) der Abstand von G zur Hinterachse, $D_1$(N/rad) eine vordere Driftsteifigkeit, $D_2$(N/rad) eine hintere Driftsteifigkeit, V(m/s) die Geschwindigkeit (23) des Fahrzeugs, $\hat{d}_{Bremsen}$ die vom gesteuerten Bremssystem zu beseitigende Störung, *Mfx* das durch das Bremsen verursachte Giermoment (61), das vom Steuersystem erzeugt werden muss, um $\hat{d}_{Bremsen}$ zu beseitigen, und $G\alpha_{Bremsen}$ die dem gesteuerten Bremssystem zugeordnete Verstärkung der Störungsbeseitigung ist.

**9.** Verfahren nach einem der vorhergehenden Ansprüche, **dadurch gekennzeichnet, dass** die Störung gemäß dem folgenden Gesetz geschätzt wird:

$$\begin{bmatrix} \dot{\hat{\psi}} \\ \dot{\hat{\beta}} \\ \dot{\hat{\alpha}}_{f2} \\ \dot{\hat{M}}_{fxf} \\ \dot{\hat{d}} \end{bmatrix} = \begin{bmatrix} \frac{D_1L_1^2+D_2L_2^2}{VI_z} & \frac{D_2L_2-D_1L_1}{I_z} & \frac{D_1L_1}{I_z} & \frac{1}{I_z} & 0 \\ -1+\frac{D_2L_2-D_1L_1}{MV^2} & \frac{D_1+D_2}{MV} & \frac{D_1}{MV} & 0 & 0 \\ 0 & 0 & -\frac{1}{\upsilon} & 0 & 0 \\ 0 & 0 & 0 & -\frac{1}{\tau} & 0 \\ 0 & 0 & 0 & 0 & 0 \end{bmatrix} \begin{bmatrix} \hat{\dot{\psi}} \\ \hat{\beta} \\ \hat{\alpha}_{f2} \\ \hat{M}_{fxf} \\ \hat{d} \end{bmatrix} + \begin{bmatrix} 0 \\ 0 \\ 0 \\ \frac{1}{\tau} \\ 0 \end{bmatrix} M_{fx} + \begin{bmatrix} \frac{D_1L_1}{I_z} \\ \frac{D_1}{MV} \\ 0 \\ 0 \\ 0 \end{bmatrix} \alpha_1 + \begin{bmatrix} 0 \\ 0 \\ \frac{1}{\upsilon} \\ 0 \\ 0 \end{bmatrix} \alpha_2 + K(V)(\dot{\psi}-\hat{y})$$

mit

$$\hat{y} = \begin{pmatrix} 1 & 0 & 0 & 0 & 1 \end{pmatrix} \begin{bmatrix} \hat{\dot{\psi}} \\ \hat{\beta} \\ \hat{\alpha}_{f2} \\ \hat{M}_{fxf} \\ \hat{d} \end{bmatrix}$$

wobei M(kg) das Gesamtgewicht des Fahrzeugs, $I_z$(N.m) die Trägheit des Fahrzeugs um eine senkrechte Achse, die durch seinen Schwerpunkt G verläuft, $L_1$(m) der Abstand von G zur Vorderachse, $L_2$(m) der Abstand von G zur Hinterachse, L(m) der Radstand des Fahrzeugs, $D_1$(N/rad) eine vordere Driftsteifigkeit, $D_2$(N/rad) eine hintere Driftsteifigkeit, $\alpha_1$ und $\alpha_2$(rad) der Winkel, den die Vorder- bzw. Hinterräder mit der Längsachse des Fahrzeugs bilden, $\alpha_{f1}$ und $\alpha_{f2}$ der gefilterte Einschlagwinkel der Vorder- bzw. Hinterräder, *Mfx* das durch das Bremsen verursachte Giermoment (25), *Mfxf* das durch das gefilterte Bremsen verursachte Giermoment, V(m/s) die Geschwindigkeit (23) des Fahrzeugs, $\dot{\psi}$ die Drehgeschwindigkeit des Fahrzeugs um seinen Schwerpunkt gemäß einer senkrechten Achse, $\beta$ der Winkel, den der Geschwindigkeitsvektor des Fahrzeugs mit seiner Längsachse bildet, y die Giergeschwindigkeit (21) des Fahrzeugs, $\upsilon$ eine Zeitkonstante, die für den Einschlagaktor charakteristisch ist, d die Störung ist, wobei ^ bedeutet, dass die Werte geschätzt sind.

**10.** System zur Verteilung einer auf ein Fahrzeug wirkenden, zu beseitigenden Gierstörung zwischen einem Vierrad-Lenksystem und einem zum Fahrzeug gehörenden, gesteuerten Bremssystem, wobei das System enthält:

- Einrichtungen, um die zu beseitigende Gierstörung in Abhängigkeit von auf das Fahrzeug bezogenen Daten zu schätzen;
- Einrichtungen, um einen Bereich von Winkeln (431) zu bestimmen, die an das Vierrad-Lenksystem anwendbar sind, in Abhängigkeit von einem verwendeten Vierrad-Lenkungswinkel (111) und einem Vierrad-Grenzlenkungswinkel (121);
- Einrichtungen, um ein minimales Moment (442) und ein maximales Moment (441) zu bestimmen, das vom Vierrad-Lenksystem erzeugt werden kann, in Abhängigkeit von dem Bereich von Winkeln (431) und von einer Verstärkung (451) der Störungsbeseitigung des Vierrad-Lenksystems; und
- Einrichtungen zur Verteilung der geschätzten Störung zwischen dem Vierrad-Lenksystem und dem gesteuerten Bremssystem in Abhängigkeit von dem minimalen Moment (452) und dem maximalen Moment (451) und von der Schätzung der zu beseitigenden Störung.

Fig. 1

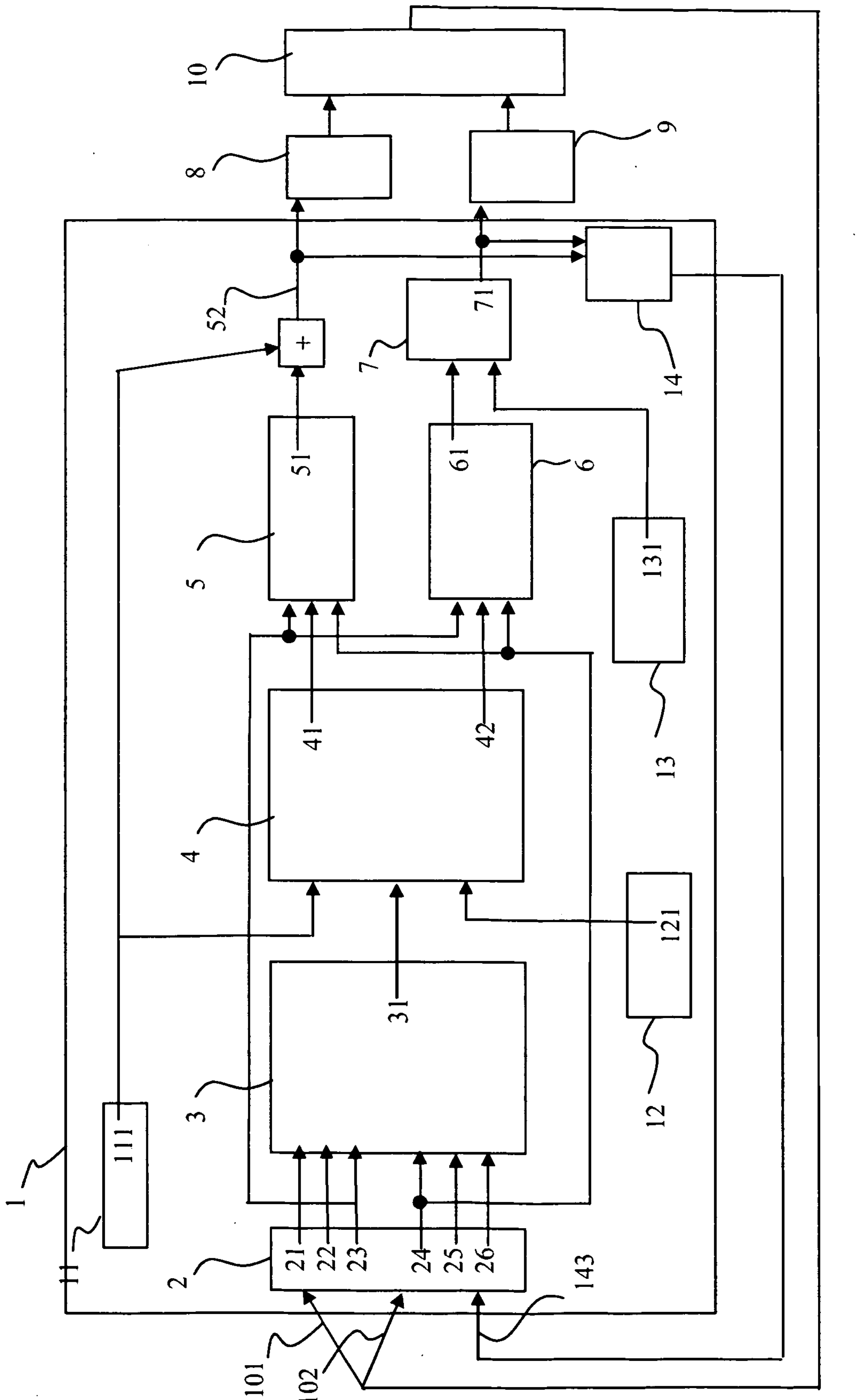
1
2
3
4
5
6
7
8
9
10
11
12
13
14
21
22
23
24
25
26
31
41
42
51
52
61
71
101
102
111
121
131
143
+

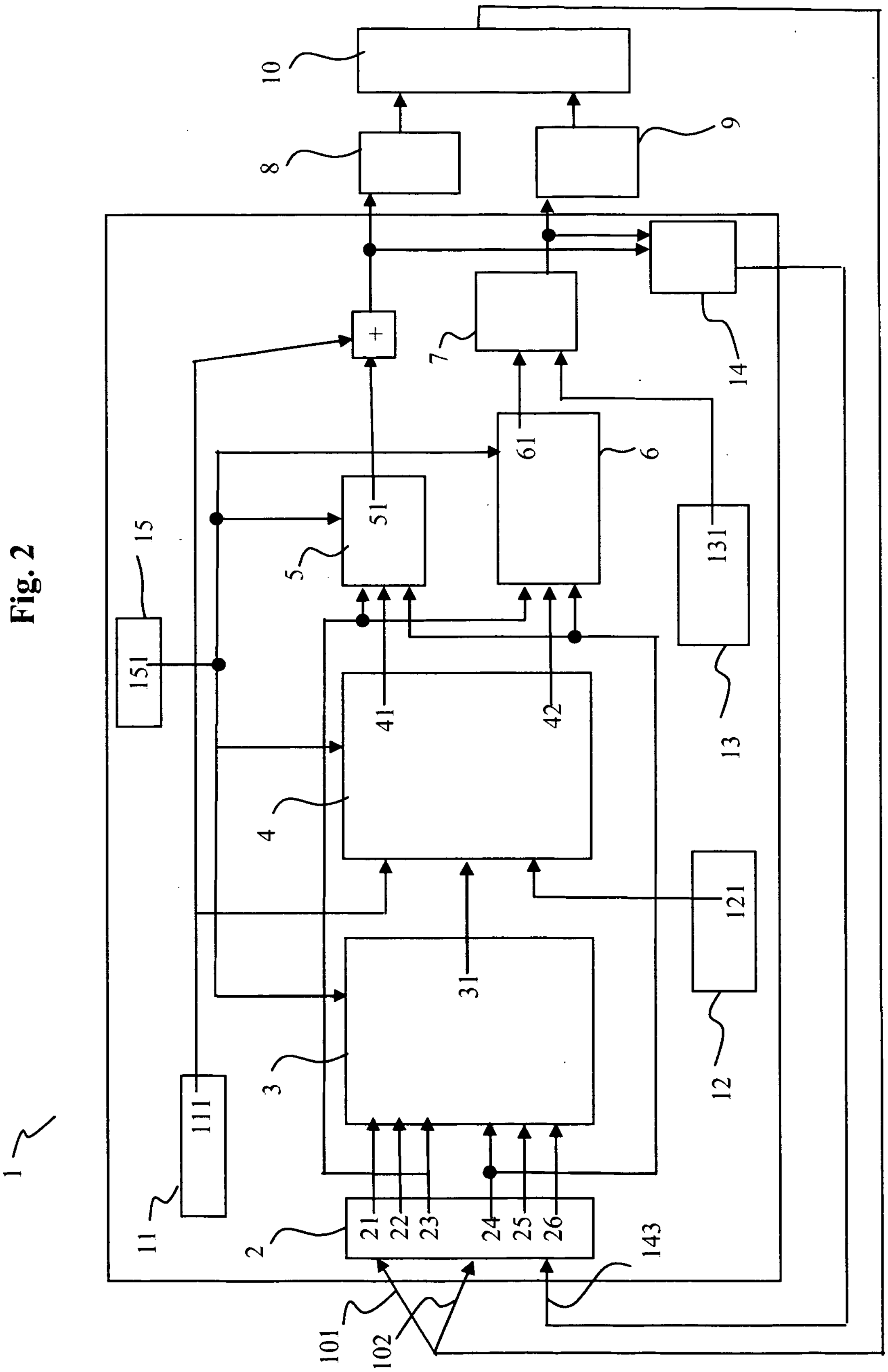
1
2
3
4
5
6
7
8
9
10
11
12
13
14
15
21
22
23
24
25
26
31
41
42
51
61
101
102
111
121
131
143
151
+

Fig. 2

Fig. 3

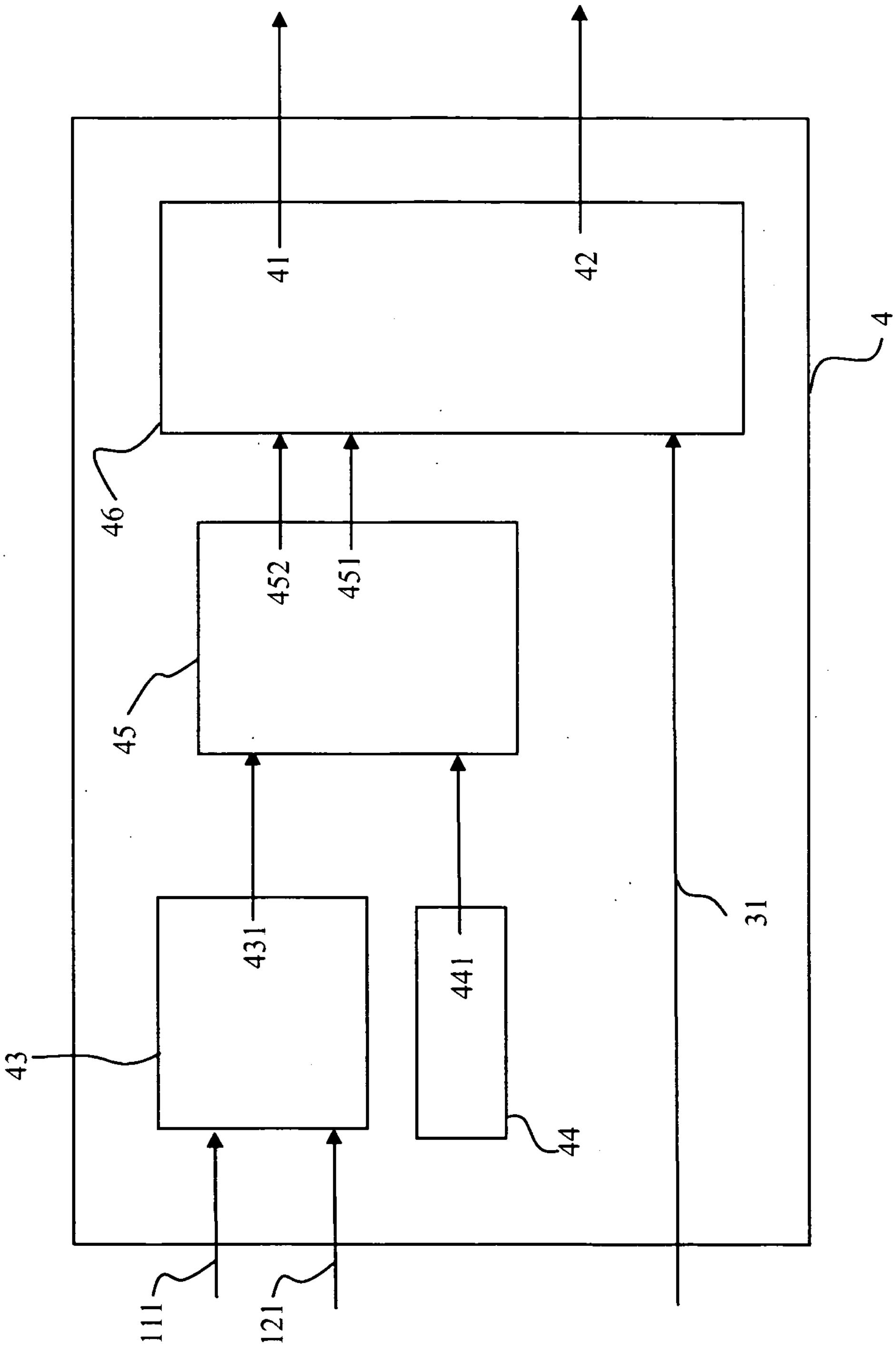

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20060025896 A